# EUROPEAN PATENT APPLICATION

(11) **EP 3 674 763 A1**
(43) Date of publication of application: **01.07.2020**
(21) Application number: 19850750.1
(22) Date of filing: 27.09.2019
(51) Int. Cl.: G02B 6/44

(54) **INTEGRATED OPTICAL CABLE AND MANUFACTURING PROCESS THEREFOR**

(30) Priority: 28.09.2018 CN 201811138513
(71) Applicant: Hengtong Optic-Electric Co., Ltd., Suzhou, Jiangsu 215234 (CN)
(72) Inventor: WANG, Yuliang, Qidu Town Wujiang District Suzhou, Jiangsu 215234 (CN); LIN, Weifeng, Qidu Town Wujiang District Suzhou, Jiangsu 215234 (CN); JIANG, Bei, Qidu Town Wujiang District Suzhou, Jiangsu 215234 (CN); LIU, Peidong, Qidu Town Wujiang District Suzhou, Jiangsu 215234 (CN); ZHU, Kai, Qidu Town Wujiang District Suzhou, Jiangsu 215234 (CN); GAO, Feng, Qidu Town Wujiang District Suzhou, Jiangsu 215234 (CN); SHEN, Zhifeng, Qidu Town Wujiang District Suzhou, Jiangsu 215234 (CN); GE, Tao, Qidu Town Wujiang District Suzhou, Jiangsu 215234 (CN)
(74) Representative: Gleim, Christian Ragnar
(86) International application number: PCT/CN2019/108359
(87) International publication number: WO 2020/063801

(57) **Abstract**

The present invention provides an integrated optical cable having a simple and compact structure designed in an integrated way, which can be applied to a variety of indoor and outdoor scenarios to meet most needs. The integrated optical cable comprises an optical fiber, a sheath provided outside the optical fiber, and a reinforcement layer further provided between the optical fiber and the sheath. The reinforcement layer is made of a high-modulus LCP material, and the tensile modulus of the LCP material is greater than 10 GPa. Meanwhile, the invention further provides a manufacturing process of the integrated optical cable, comprising storing optical fiber, coloring optical fiber, coating, sheathing, and leaving the factory.

## Description

### TECHNICAL FIELD

The present invention relates to the field of optical cables, in particular to an integrated optical cable and manufacturing process thereof.

### BACKGROUND

As the acceleration of the process of informatization and the further advancement of triple play, people's demands for high-speed, wide-ranging and intelligent accessing to network have been gradually realized. Under new environmental conditions, the high performance, small size, and environmental resistance of optical cables have become a new development direction of access network optical cables. Nowadays the thermal expansion coefficient of tight buffer materials is two orders of magnitude higher than that of optical fibers, which causes material shrinkage of optical cables under the temperature change and affects the transmission performance of optical fibers. Meanwhile, there is a contradiction between reducing the size of the structure and improving the mechanical properties. In addition, the traditional yarn reinforcements are inconsistent with the length of the optical fiber and the sheath, which causes the optical fiber to be stressed first and the lifetime of the fiber is reduced. Therefore, it is very difficult to meet the requirements of a certain mechanical strength and good environmental resistance in the design of a small-sized optical fiber unit or optical cable.

At present, liquid crystal polymer materials (LCP) have been attempted as reinforcement materials in telecommunication optical cables or special optical cables because of their self-reinforcement, excellent thermal stability, heat resistance and weather resistance. In the patent publication No. CN101120277A, kazimar from ADC TELECOMMUNICATIONS INC uses the method of embedding LCP reducer in the thermoplastic substrate material to reduce the post shrinkage of the material and enhance the mechanical properties. However, there are still problems in the compatibility of LCP with conventional materials and extrusion process. In the patent publication No. CN203324533U, Bingyan Chen et al. disclosed a novel high-temperature optical cable applicable to various special fields, which is composed of a tight buffer optical fiber, a loose tube and a LCP sheath. This novel optical cable is not suitable for popularization because it includes a variety of special materials and is directed for a single application field. In the patent published as CN202171673U, Bin Qiu et al. used a new method of covering LCP material on the surface of the optical fiber, and then coating it with polyvinylidene fluoride and a low-smoke halogen-free material. This novel single-core low-smoke and halogen-free optical cable also has problems of large size and high material consumption.

### SUMMARY

In view of the above problems, the invention provides an integrated optical cable having a simple and compact structure designed in an integrated way, which can be applied to a variety of indoor and outdoor scenarios to meet most needs. At the same time, the present invention also provides a manufacturing process for the integrated optical cable.

The technical solution is provided as follows: an integrated optical cable, comprising an optical fiber and a sheath provided outside the optical fiber, and a reinforcement layer further provided between the optical fiber and the sheath, wherein the reinforcement layer is made of LCP materials, and the tensile modulus of the LCP materials is greater than 10 GPa.

Further, a buffer layer is further provided between the optical fiber and the reinforcement layer, and the buffer layer is made of any one of TPEE and high temperature resistant silicone rubber.

Further, the sheath is made of a high-temperature nylon material.

Further, the sheath is made of any one of LSZH, PVC, PEEK.

Further, the reinforcement layer has a wall thickness of 0.2-0.5mm, and the sheath has a wall thickness of 0.2-0.5 mm.

Further, the buffer layer has a wall thickness of 0.2-0.49 mm.

An integrated optical cable manufacturing process for manufacturing the above-mentioned integrated optical cable, characterized by comprising the following steps:
S1: storing optical fiber, the stored optical fibers are screened for qualified optical fibers;
S2: coloring optical fiber, the qualified optical fibers are colored;
S3: sheathing, a reinforcement layer and a sheath layer are formed for the optical cable by double-layer co-extrusion on the optical fiber of S2; and
S4: leaving the factory, the optical cables manufactured in step S3 are packaged to leave the factory;
wherein detection is performed separately in each of steps S1 to S4.

An integrated optical cable manufacturing process for manufacturing the above-mentioned integrated optical cable, characterized by comprising the following steps:
S1: storing optical fiber, the stored optical fibers are screened for qualified optical fibers;
S2: coloring optical fiber, the qualified optical fibers are colored;
S3: secondary coating, a buffer layer is formed by extruding on optical fiber;
S4: sheathing, a reinforcement layer and a sheath layer are formed for the optical cable by double-layer co-extrusion on the semi-finished product manufactured in step S3; and
S5: leaving the factory, the optical cables manufactured in step S4 are packaged to leave the factory;
wherein detection is performed separately in each of steps S1 to S5.

Further, in the secondary coating process of step S3, the pay-off tension of the optical fiber is controlled to be 70 g-90 g.

Further, in the sheathing process of step S4, the extrusion temperature of the inner reinforcement layer is controlled to be 280 °C to 350 °C, the extrusion temperature of the outer sheath layer is controlled to be 300 °C to 330 °C, the speed of the production line is controlled to be 100 m/min to 300 m/min, and the take-up tension of the sheath is controlled to be 290 g-310 g.

The integrated optical cable of the invention uses a high-modulus liquid crystal polymer (LCP) as the material of the reinforcement layer, and the LCP has a tensile modulus greater than 10GPa, so that the manufactured tight buffer optical fiber has the characteristics of high strength, low shrinkage, high temperature resistance, excellent flame retardancy, etc., which can replace the original tight buffer optical fiber and aramid reinforcement, and realize the integration of structure and material. Meanwhile, the invention realizes that the reinforcing element and the optical fiber are stressed together, the strain of the optical fiber is reduced, and the risk of lifetime reduction caused by the stress of the optical fiber is effectively reduced. Furthermore, in the invention, a high temperature resistant material such as a thermoplastic polyester elastomer TPEE or a high temperature resistant silicon rubber can be selected as the elastic buffer layer to protect the optical fiber from bending; the sheath may also be made of high-temperature nylon materials to further guarantee the high temperature resistance, flame retardancy and high strength performance of the optical cable, and simultaneously give the optical cable wear resistance and coloring performance to meet the needs of most indoor optical cables. The invention may also use conventional thermoplastic low-smoke halogen-free flame-retardant polyolefins LSZH, polyvinyl chloride soft rubber PVC, polyether ether ketone PEEK, etc., as sheath materials to meet the requirements of indoor optical cables.

### BRIEF DESCRIPTION OF THE DRAWINGS

FIG. 1 is a schematic structural diagram of an integrated optical cable in embodiment 1;
FIG. 2 is a process flow chart of the manufacturing process of the integrated optical cable in embodiment 1.
FIG. 3 is a schematic structural diagram of an integrated optical cable in embodiment 2; and
FIG. 4 is a process flow chart of the manufacturing process of the integrated optical cable in embodiment 2.

### DETAILED DESCRIPTION

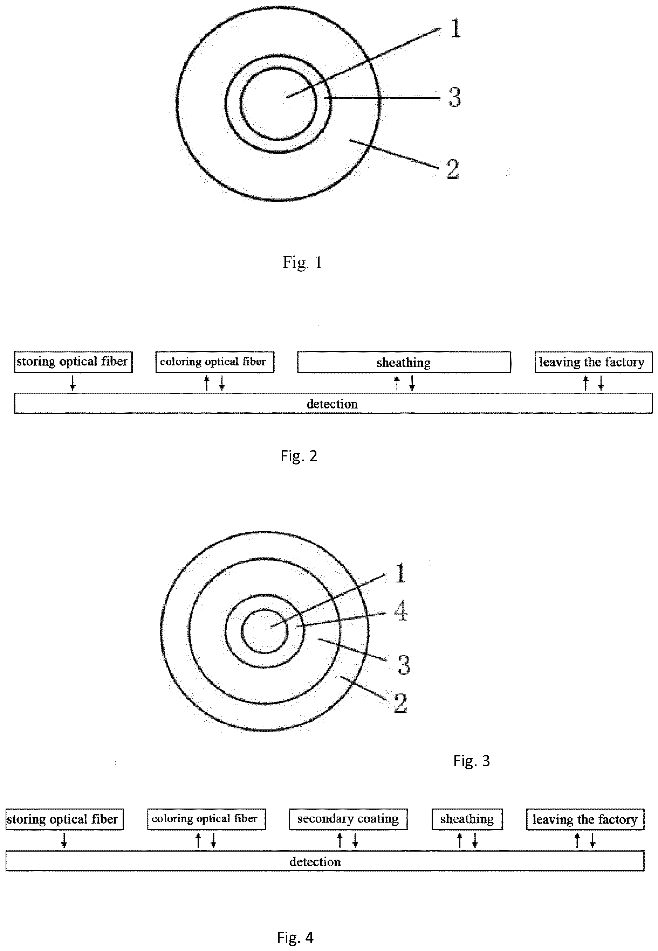

Embodiment 1: as shown in FIG. 1, an integrated optical cable of the invention includes an optical fiber 1 and a sheath 2 provided outside the optical fiber, and a reinforcement layer 3 further provided between the optical fiber 1 and the sheath 2. The reinforcement layer 3 is a made of LCP material and has a wall thickness of 0.2-0.5 mm, and the sheath has a wall thickness of 0.2-0.5 mm.

In this embodiment, the sheath 2 is made of high temperature nylon material. In addition, the sheath 2 may also be made of any of LSZH, PVC, PEEK.

As shown in FIG. 2, the manufacturing process of the integrated optical cable of embodiment 1 comprises the following steps:
S1: storing optical fiber, the stored optical fibers are screened for qualified optical fibers;
S2: coloring optical fiber, the qualified optical fibers are colored;
S3: sheathing, a reinforcement layer and a sheath layer are formed the optical cable by double-layer co-extrusion on the optical fiber of S2; and
S4: leaving the factory, the optical cables manufactured in step S3 are packaged to leave the factory;
wherein detection is performed separately in each of steps S1 to S4.

Embodiment 2: as shown in FIG. 1, the integrated optical cable of the invention includes an optical fiber 1 and a sheath 2 provided outside the optical fiber 1, and a reinforcement layer 3 further provided between the optical fiber 1 and the sheath 2. The reinforcement layer 3 is a made of LCP material, and a buffer layer 4 is further provided between the optical fiber 1 and the reinforcement layer 3. The buffer layer is made of any of TPEE and high temperature resistant silicone rubber. The reinforcement layer has a wall thickness of 0.2-0.5 mm, the sheath has a wall thickness of 0.2-0.5 mm, and the buffer layer has a wall thickness of 0.2-0.49 mm.

In this embodiment, the sheath 2 is made of high temperature nylon material. In addition, the sheath 2 may also be made of any of LSZH, PVC, PEEK.

As shown in FIG. 4, the manufacturing process of the integrated optical cable of embodiment 2 comprises the following steps:
S1: storing optical fiber, the stored optical fibers are screened for qualified optical fibers;
S2: coloring optical fiber, the qualified optical fibers are colored;
S3: secondary coating, a buffer layer is formed by extruding on optical fibers;
S4: sheathing, a reinforcement layer and a sheath layer are formed for the optical cable by double-layer co-extrusion on the semi-finished product manufactured in step S3; and
S5: leaving the factory, the optical cables manufactured in step S4 are packaged to leave the factory;
wherein detection is performed separately in each of steps S1 to S5.

In the secondary coating process of step S3, the pay-off tension of the optical fiber is controlled to be 70 g-90 g. In the sheathing process of step S4, a double-layer co-extrusion process is adopted, the extrusion temperature of the inner reinforcement layer of the inner layer is controlled to be 280 °C to 350 °C, the extrusion temperature of the outer sheath layer is controlled to be 300 °C to 330 °C, the speed of the production line to is controlled be 100 m/min to 300 m/min, the take-up tension of the sheath is controlled to be 290 g-310 g, and hot water temperature is set to be 65 °C-75 °C. The interface effect between LCP and nylon is regulated by adjusting the nylon extrusion amount of the sheath and the temperature of the extrusion reinforcement layer, so as to further enhance the mechanical properties of the optical cable.

The integrated optical cable of the invention uses a high modulus liquid crystal polymer (LCP) as the material of the reinforcement layer, and the LCP has a tensile modulus greater than 10GPa, so that the manufactured tight buffer optical fiber has the characteristics of high strength, low shrinkage, high temperature resistance, excellent flame retardancy, etc., which can replace the original tight buffer optical fiber and aramid reinforcement, and realize the integration of structure and material. Meanwhile, the invention realizes that the reinforcing element and the optical fiber are stressed together, the strain of the optical fiber is reduced, and the risk of lifetime reduction caused by the stress of the optical fiber is effectively reduced. Furthermore, in the invention, a high temperature resistant material such as a thermoplastic polyester elastomer TPEE or a high temperature resistant silicon rubber can be selected as the elastic buffer layer to protect the optical fiber from bending; the sheath may also be made of high-temperature nylon materials to further guarantee the high temperature resistance, flame retardancy and high strength performance of the optical cable, and simultaneously give the optical cable wear resistance and coloring performance to meet the needs of most indoor optical cables. The invention may also use conventional thermoplastic low-smoke halogen-free flame-retardant polyolefins LSZH, polyvinyl chloride soft rubber PVC, polyether ether ketone PEEK, etc., as sheath materials to meet the requirements of indoor optical cables.

The above embodiments only show two of the implementation manners of the invention, the description of which is more specific and detailed, but it cannot be understood as a limitation on the scope of the invention patent. It should be noted that, for those of ordinary skill in the art, several modifications and improvements can be made without departing from the concept of the present invention, which all belong to the protection scope of the invention. Therefore, the protection scope of the invention patent shall be subject to the protection scope of the appended claims.

## Claims

1. An integrated optical cable, comprising:
an optical fiber;
a sheath provided outside the optical fiber; and
a reinforcement layer provided between the optical fiber and the sheath,
wherein the reinforcement layer is made of LCP materials, and the tensile modulus of the LCP materials is greater than 10 GPa.

2. The integrated optical cable of claim 1, wherein a buffer layer is provided between the optical fiber and the reinforcement layer, and the buffer layer is made of any one of TPEE and high temperature resistant silicone rubber.

3. The integrated optical cable of claim 1, wherein the sheath is made of a high temperature nylon material.

4. The integrated optical cable of claim 1, wherein the sheath is made of any one of LSZH, PVC, PEEK.

5. The integrated optical cable of claim 1, wherein the reinforcement layer has a wall thickness of 0.2-0.5 mm, and the sheath has a wall thickness of 0.2-0.5 mm.

6. The integrated optical cable of claim 2, wherein the buffer layer has a wall thickness of 0.2-0.49 mm.

7. A manufacturing process of an integrated optical cable for manufacturing the integrated optical cable of any one of claims 1, 3, 4, and 5, comprising:
S1: storing optical fiber, the stored optical fibers are screened for qualified optical fibers;
S2: coloring optical fiber, the qualified optical fibers are colored;
S3: sheathing, a reinforcement layer and a sheath layer are formed for the optical cable by double-layer co-extrusion on the optical fiber of S2; and
S4: leaving the factory, the optical cables manufactured in step S3 are packaged to leave the factory;
wherein detection is performed separately in each of steps S1 to S4.

8. A manufacturing process of an integrated optical cable for manufacturing the integrated optical cable of any of claims 2 and 6, **characterized by** comprising the following steps:
S1: storing optical fiber, the stored optical fibers are screened for qualified optical fibers;
S2: coloring optical fiber, the qualified optical fibers are colored;
S3: secondary coating, a buffer layer is formed by extruding on optical fiber;
S4: sheathing, a reinforcement layer and a sheath layer are formed for the optical cable by double-layer co-extrusion on the semi-finished product manufactured in step S3; and
S5: leaving the factory, the optical cables manufactured in step S4 are packaged to leave the factory;
wherein detection is performed separately in each of steps S1 to S5.

9. The manufacturing process of an integrated optical cable of claim 8, wherein in the secondary coating process of step S3, the pay-off tension of the optical fiber is controlled to be 70 g-90 g.

10. The manufacturing process of an integrated optical cable of claim 8, wherein in the sheathing process of step S4, a double-layer con-extrusion process is adopted, where the extrusion temperature of the inner reinforcement layer is controlled to be 280 °C to 350 °C, the extrusion temperature of the outer sheath layer is controlled to be 300 °C to 330 °C, the speed of the production line is controlled to be 100m/min to 300m/min, and the take-up tension of the sheath is controlled to be 290 g-310 g.
